# EUROPÄISCHE PATENTSCHRIFT

(11) **EP 1 693 926 B1**
(45) Veröffentlichungstag und Bekanntmachung des Hinweises auf die Patenterteilung: **14.11.2007**
(21) Anmeldenummer: 06007159.4
(22) Anmeldetag: 01.07.2003
(51) Int. Cl.: H01R 4/36, F16B 35/00

(54) **Klemmenkörper für eine Vorrichtung zum Klemmen und elektrischen Kontaktieren einer Anschlussleitung**
Clamp body for a device for wedging and electrical contacting of a connecting cable
Corps de collier pour un dispositif visant coincer et prendre contact électrique d'une conduite de raccordement

(30) Priorität: 06.07.2002 DE 10230502
(43) Veröffentlichungstag der Anmeldung: 23.08.2006
(62) Teilanmeldung aus: 03014925.6
(73) Patentinhaber: Pfisterer Kontaktsysteme GmbH & Co. KG, 73650 Winterbach (DE)
(72) Erfinder: Frank, Erich, 73269 Hochdorf (DE)
(74) Vertreter: Bartels & Partner

(56) Entgegenhaltungen:
- EP-A- 1 130 683
- DE-U1- 29 719 561

## Beschreibung

Die Erfindung betrifft einen Klemmenkörper für eine Vorrichtung zum Klemmen und elektrischen Kontaktieren einer Anschlußleitung, insbesondere einer feindrähtigen Transformator-Anschlußleitung, gemäß dem Oberbegriff des Anspruchs 1.

Bei den bekannten Klemmschrauben, die beispielsweise einen sphärischen Endabschnitt aufweisen, besteht insbesondere beim Klemmen von feindrähtigen Anschlußleitungen das Problem, daß die feinen Drähte oder Litzendrähte der Anschlußleitung beim Eindrehen der Klemmschraube in die zugehörige Klemmvorrichtung verdreht und mithin beschädigt werden. Dadurch ist nicht nur die mechanische Klemmwirkung, sondern insbesondere die dauerhafte elektrische Kontaktierung negativ beeinträchtigt.

Aus der DE 76 40 466 U ist eine Klemmschraube bekannt, bei welcher der biegesteif ausgebildete abtrennbare Klemmstückabschnitt eine dem Gewindeabschnitt zugewandte kegelförmige Anlagefläche aufweist.
Die sich dadurch nach dem Abtrennen ergebende spitzwinklige Kante des Klemmstückabschnitts wird beim Anziehen der Klemmschraube derart plastisch verformt, daß sie in einen durch einen konischen Übergangsabschnitt gebildeten Hinterschnitt eingreift, und dadurch der Klemmstückabschnitt in der Art einer Nietverbindung unverlierbar an dem Gewindeabschnitt festgelegt ist.

Die DE 297 19 561 U1 offenbart eine Buchsenklemme zum Gegeneinanderklemmen eines ersten und eines zweiten elektrischen Leiters mittels einer Klemmschraube, bei der die Buchsenklemme einen einstückigen Grundkörper umfaßt, in welchem Aussparungen für den ersten und den zweiten elektrischen Leiter in parallelen beabstandeten Verlaufsebenen liegend und miteinander über einen Durchbruch in Verbindung stehend angeordnet sind. Bei der bekannten Lösung verläuft eine Gewindebohrung für die Klemmschraube quer zu den ersten und zweiten Aussparungen des Grundkörpers. Durch die Verbindung der Aussparungen untereinander wird im Durchbruch zwischen den Verbindungen der erste und der zweite Leiter direkt gegeneinander gepresst.

Der Erfindung liegt daher die Aufgabe zugrunde, einen Klemmenkörper bereitzustellen, mit dem sowohl grobdrähtige Anschlußleitungen bis hin zu Volldrahtleitungen als auch insbesondere feindrähtige Anschlußleitungen mechanisch sicher und elektrisch dauerhaft kontaktiert werden können. Die in den Klemmenkörper einschraubbaren Klemmschrauben sollen darüber hinaus kostengünstig herstellbar sein. Der erfindungsgemäße Klemmenkörper soll vielseitig einsetzbar sowie einfach in der Handhabung und Montage sein.

Diese Aufgabe ist durch den im Anspruch 1 bestimmten Klemmenkörper gelöst. Besondere Ausführungsarten der Erfindung sind in den Unteransprüchen bestimmt.

Der Klemmenkörper weist mindestens zwei einander zugeordnete und miteinander verbundene Öffnungen auf, die jeweils für ein Einschrauben der Klemmschraube geeignet sind, insbesondere jeweils ein entsprechendes Gewinde aufweisen. Die zu klemmende Anschlußleitung kann wahlweise in die eine oder andere Öffnung eingesteckt werden, wobei die zugehörige Klemmschraube in die freigebliebene Öffnung eingeschraubt werden kann und dadurch die Anschlußleitung elektrisch kontaktiert und geklemmt werden kann. Vor dem Einschrauben kann über die zweite Öffnung auch die korrekte Lage der Anschlußleitung kontrolliert werden, insbesondere ob die Anschlußleitung ausreichend weit eingeschoben ist, damit eine gute Kontaktierung und Klemmung gewährleistet ist.

Vorzugsweise sind die beiden einander zugeordneten Öffnungen rechtwinklig angeordnet. Dadurch kann beispielsweise die zu klemmende Anschlußleitung wahlweise horizontal oder vertikal zu der Klemmvorrichtung zugeführt werden. Der Klemmstückabschnitt drückt rechtwinklig auf die Anschlußleitung, wodurch Einzeladern der Anschlußleitung weder aus der Bohrung axial herausgeschoben werden noch radial verdrängt werden. Durch das in der Öffnung vorhandene Gewinde ist eine qualitativ hochwertige und dauerhafte elektrische Kontaktierung auch bei verschmutzten oder oxidierten Leitern gewährleistet.

Der Klemmenkörper weist vorzugsweise einstückig ausgebildet eine Gegenlagerfläche für die Anlage der zu kontaktierenden Anschlußleitung auf. In einer besonderen Ausführungsart der Erfindung ist die Öffnung größer als der Klemmstückabschnitt der Klemmschraube.

Bei der mit dem erfindungsgemäßen Klemmenkörper zu verwendenden Klemmschraube weist der abgetrennte Klemmstückabschnitt im wesentlichen die Form einer Ringscheibe auf, die unter Anlage an den Gewindeabschnitt im Bereich einer an dem Klemmstückabschnitt und/oder an dem Gewindeabschnitt angebrachten Fase tellerfederförmig verformbar ist. Dadurch ergibt sich eine die Klemmkraft und/oder Kontaktkraft speichernde Verformung des Klemmstückabschnittes und dadurch eine dauerhaft hohe Kontakt- und Klemmkraft. Diese Kraftspeicherwirkung kann bereits bei Verwendung eines üblichen Automatenstahls für die Klemmschraube erreicht werden.

Die Krafteinleitungsfläche ist dabei üblicherweise eine Werkzeugangriffsfläche, beispielsweise ein Innensechskant, ein Schlitz oder Kreuzschlitz, ein Außensechskant oder dergleichen. Vorzugsweise ragt die Krafteinleitungsfläche ein Stück weit in den Gewindeabschnitt hinein und/oder ist ohne einen Übergangsbereich auf der Außenfläche von dem Gewindeabschnitt ausgebildet. Der Außendurchmesser des Gewindeabschnitts weist vorzugsweise die größte Erstreckung in Radialrichtung der gesamten Klemmschraube auf. Der Außendurchmesser des Klemmstückabschnittes, der im wesentlichen scheibenförmig mit in Bezug auf die Längsachse endseitig planparallelen ersten und zweiten Anlageflächen sein kann, ist gleich groß oder etwas geringer als der Außendurchmesser des Gewindeabschnittes.

Vorzugsweise werden abisolierte Anschlußleitungen kontaktiert. Grundsätzlich kann jedoch die Klemmschraube, insbesondere der Klemmstückabschnitt, Schneidmittel aufweisen, mit denen eine auf der Anschlußleitung befindliche Isolation durchtrennbar ist. Das Abtrennen des Klemmstückabschnitts erfolgt vorzugsweise erst nach Durchtrennen der Isolation.

Beim die Anschlußleitung klemmenden Eindrehen der Klemmschraube in eine entsprechenden Gewindebohrung der Klemmvorrichtung kommt es zu einem Abtrennen des Klemmstückabschnittes von dem Gewindeabschnitt. Anschließend muß die Klemmschraube weiter angezogen werden.
Zur Vermeidung von Beschädigungen insbesondere feindrähtiger Anschlußleitungen ist es von Vorteil, wenn sich beim weiteren Eindrehen des Gewindeabschnitts der Klemmstückabschnitt nicht mehr im selben Maße dreht wie der Gewindeabschnitt, vorzugsweise im wesentlichen gar keine Drehbewegung mehr ausführt. Dies wird dadurch erreicht, daß unter Berücksichtigung der Reibungskoeffizienten zwischen dem Klemmstückabschnitt und dem Gewindeabschnitt einerseits und der zu kontaktierenden Anschlußleitung andererseits die wirksame Reibfläche, die durch entsprechende Anlageflächen gebildet ist, so angeordnet sind, daß die von der im wesentlichen feststehenden Anschlußleitung auf den Klemmstückabschnitt eingeleiteten Kräfte ein höheres Drehmoment bewirken, als die von dem Gewindeabschnitt auf den Klemmstückabschnitt eingeleiteten Kräfte.

In einer besonderen Ausführungsart der Erfindung werden insbesondere dann, wenn die Reibungskoeffizienten zwischen Klemmstückabschnitt und Gewindeabschnitt einerseits und Klemmstückabschnitt und zu kontaktierender Anschlußleitung andererseits im wesentlichen gleich sind, die gewünschten unterschiedlichen Drehmomente dadurch erreicht, daß die erste Anlagefläche des Klemmstückabschnitts radial weiter innen liegt als die zweite Anlagefläche. Üblicherweise sind diese Anlageflächen ringförmig ausgebildet, insbesondere kreisringförmig. Die wirksamen Reibkräfte können auch durch die Wahl der Werkstoffe, eine Oberflächenbehandlung der Anlageflächen und/oder durch Verwendung von Schmierstoffen beeinflußt werden.

In einer besonderen Ausführungsart der Erfindung ist die erste Anlagefläche radial außenseitig begrenzt durch die Fase an dem Gewindeabschnitt und/oder an dem Klemmstückabschnitt. Der Winkel zwischen der Fase und der verbleibenden Anlagefläche kann dabei wenige Grad betragen. Vorteilhaft in diesem Zusammenhang ist, wenn die radial äußere Begrenzung der Anlagefläche definiert ist.

In einer besonderen Ausführungsart der Erfindung ist im einstückigen Zustand der Klemmstückabschnitt mittels eines Übergangsabschnitts unter Ausformung einer Sollbruchstelle mit dem Gewindeabschnitt verbunden. Beispielsweise kann der Übergangsabschnitt eine zylindrische, insbesondere kreiszylindrische Außenumfangsfläche aufweisen. Weiterhin vorteilhaft ist, wenn beim Abtrennen des Klemmstückabschnitts der Übergangsabschnitt an der Sollbruchstelle einen Hinterschnitt ausbildet, der von einem an der Sollbruchstelle gebildeten Kragen des abgetrennten Klemmstückabschnitts hintergreifbar ist. Dadurch ist der Klemmstückabschnitt auch nach dem Abtrennen unverlierbar an der Klemmschraube festgelegt, wenngleich frei gegenüber dem Gewindeabschnitt drehbar.

In einer besonderen Ausführungsart der Erfindung ist im einstückigen Zustand der Übergangsabschnitt durch eine in Bezug auf die Längsachse eingebrachte, vorzugsweise symmetrische oder sogar ringförmige Nut gebildet. Dadurch lassen sich derartige Klemmschrauben besonders einfach und automatisierbar herstellen. Die Nut ist beispielsweise auf einer Drehbank mit einem Formmeißel einstechbar.

In einer besonderen Ausführungsart der Erfindung weist der Klemmstückabschnitt im einstückigen Zustand der Klemmschraube auf seiner der zu kontaktierenden Anschlußleitung zugewandten Fläche eine Ausnehmung auf, deren Durchmesser im Bereich der Sollbruchstelle größer ist als der Außendurchmesser des Übergangsabschnittes im Bereich der Sollbruchstelle. Diese Ausnehmung kann beispielsweise rotationssymmetrisch in Bezug auf die Längsachse der Klemmschraube sein. Besonders einfach kann diese Ausnehmung durch eine entsprechende Sacklochbohrung gebildet sein, die in eine Stirnfläche der Klemmschraube an ihrem Klemmstückabschnittsende gebildet sein.

In einer besonderen Ausführungsart der Erfindung ragt im abgetrennten Zustand der Übergangsabschnitt in Richtung auf die zu kontaktierende Anschlußleitung nicht über den Klemmstückabschnitt hinaus. Dadurch ist verhindert, daß beim Anziehen des Gewindeabschnitts der sich mitdrehende Übergangsabschnitt die zu kontaktierende Anschlußleitung verdreht oder beschädigt. Beispielsweise kann hierzu die Erstreckung der Nut in Richtung der Längsachse der Klemmschraube geringer gewählt werden als die Erstreckung des Klemmstückabschnittes in dieser Richtung.

Besonders vorteilhaft im Hinblick auf die Herstellung ist eine Ausführungsart der Erfindung, bei der im einstückigen Zustand die Klemmschraube rotationssymmetrisch in Bezug auf die Längsachse ist. Dadurch lassen sich alle wesentlichen Fertigungsschritte auf einer Drehbank ausführen.

Weitere Vorteile, Merkmale und Einzelheiten der Erfindung ergeben sich aus den Unteransprüchen und der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt eine Seitenansicht einer Klemmschraube,
- Fig. 2: zeigt die Klemmschraube der Fig. 1 im Querschnitt,
- Fig. 3: zeigt in vergrößerter Darstellung einen Ausschnitt der Klemmschraube der Fig. 2 im Bereich III,
- Fig. 4: zeigt die Klemmschraube mit von dem Übergangsabschnitt abgetrennten Klemmstückabschnitt,
- Fig. 5: zeigt eine sich beim weiteren Eindrehen der Klemmschraube sich ergebende Verformung des Klemmstückabschnittes,
- Fig. 6: zeigt eine Vorrichtung zum Klemmen und elektrischen Kontaktieren einer Anschlußleitung,
- Fig. 7: zeigt ein zweites Ausführungsbeispiel einer Klemmvorichtung,
- Fig. 8: zeigt die Klemmvorrichtung der Fig. 7 aus einer anderen Perspektive, und
- Fig. 9: zeigt ein drittes Ausführungsbeispiel einer Klemmvorichtung.

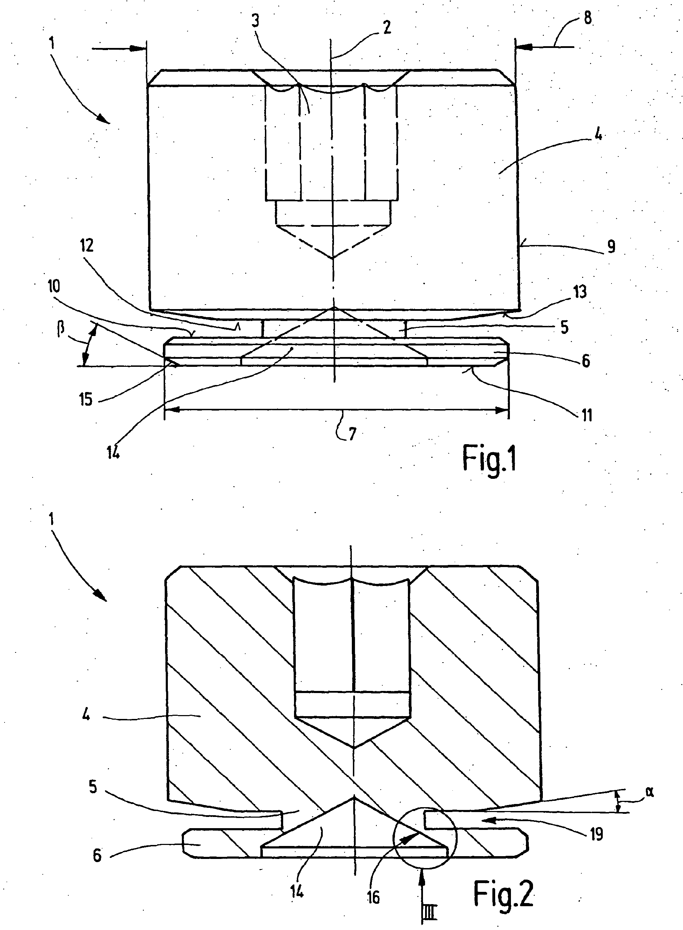

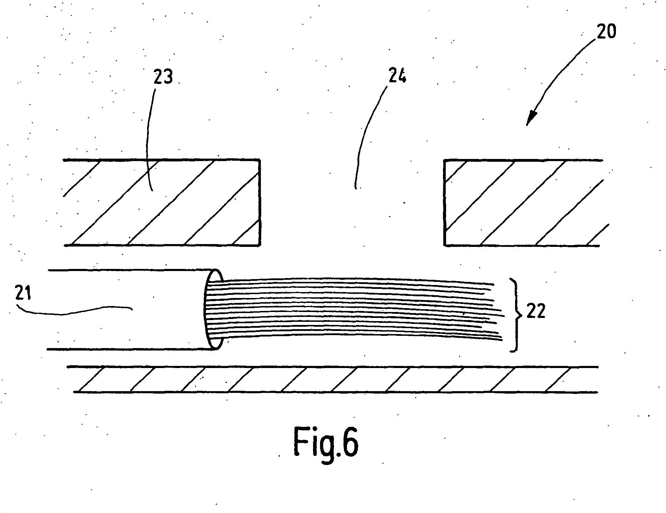

Die Fig. 1 zeigt eine Seitenansicht einer Klemmschraube 1. An ihrem von der Anschlußleitung 21 (Fig. 6) abgewandten Ende weist die Klemmschraube 1 als Krafteinleitungsfläche 3 eine in Bezug auf die Längsachse 2 symmetrische und zylindrische Bohrung auf, die mindestens abschnittsweise im Querschnitt ein Sechseck bildet zum Einsetzen eines entsprechenden Schlüsselwerkzeuges.

Einstückig bildet die Klemmschraube 1 einen Gewindeabschnitt 4, einen Übergangsabschnitt 5 sowie einen Klemmstückabschnitt 6 aus. Wie in den nachfolgenden Figuren noch dargestellt, ist der Klemmstückabschnitt 6 beim Klemmen der Anschlußleitung abtrennbar. Der Außendurchmesser 7 des Klemmstückabschnitts 6 ist etwas geringer als der Außendurchmesser 8 des Gewindeabschnitts 4, der auf seiner Außenumfangsfläche beispielsweise ein metrisches Gewinde der Größe M 26 X 1,5 aufweist. Typische Werte für den Außendurchmesser 7 des Klemmstückabschnitts 6 betragen in diesem Fall etwa 24 mm, wodurch die Montage der Klemmschraube vereinfacht ist.

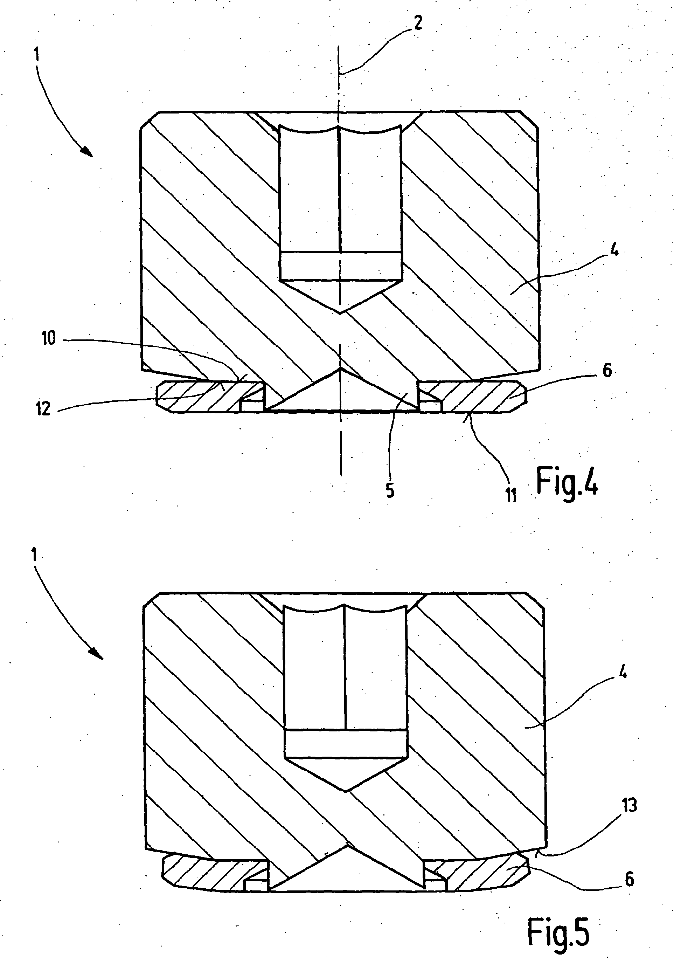

Der Klemmstückabschnitt 6 hat im wesentlichen die Form einer Scheibe mit in Bezug auf die Längsachse 2 endseitig planparallelen ersten und zweiten Anlageflächen 10, 11. Die erste Anlagefläche 10 ist dem Gewindeabschnitt 4 zugeordnet und korrespondiert mit einer von dem Gewindeabschnitt 4 ausgebildeten Reibschlußfläche 12, die sich ausgehend von dem Übergangsabschnitt 5 einen gewissen Betrag planparallel zur ersten Anlagefläche 10 in radialer Richtung erstreckt. Anschließend geht die Reibschlußfläche 12 in eine erste Fase 13 über, die mit der Längsachse 12 einen spitzen Winkel von beispielsweise 80° einschließt. Radial außenseitig geht die erste Fase 13 in die das Gewinde 9 tragende Außenumfangsfläche des Gewindeabschnitts 4 über. Wie insbesondere in der nachfolgend beschriebenen Fig. 4 dargestellt ist, wird die Krafteinleitung von dem Gewindeabschnitt 4 in den abgetrennten Klemmstückabschnitt 6 im wesentlichen von der Reibschlußfläche 12 bestimmt.

Auf seiner der zu kontaktierenden Anschlußleitung 21 zugeordneten zweiten Anlagefläche 11 weist der Klemmstückabschnitt eine in Bezug auf die Längsachse 2 zentrische Ausnehmung 14 auf, deren Kegelform sich bis in den Gewindeabschnitt 4 hinein erstreckt. Die außenseitigen Kanten des Klemmstückabschnitts 6 weisen jeweils eine zweite Fase 15 auf mit einem typischen Fasenwinkel β von etwa 30°.

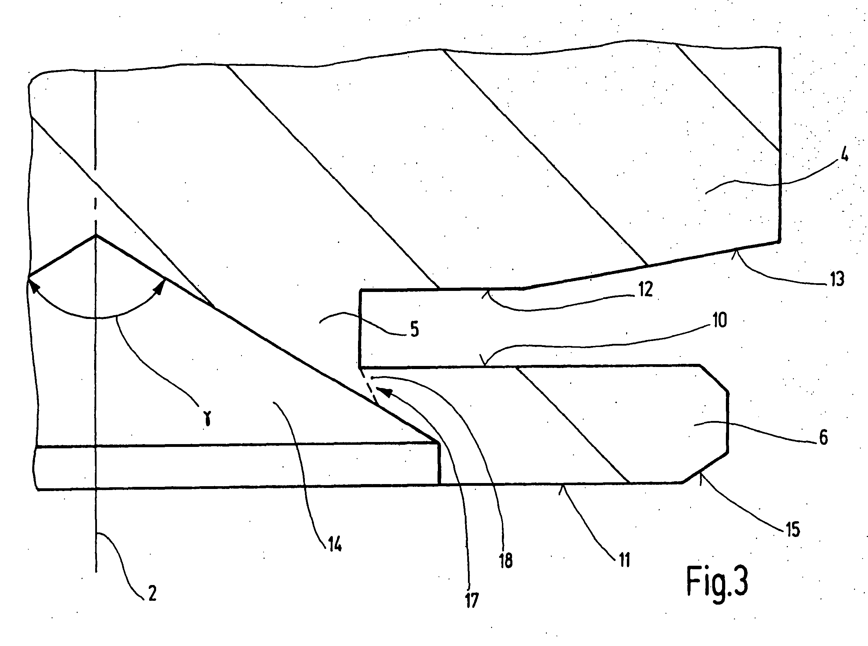

Die Fig. 2 zeigt die Klemmschraube 1 der Fig. 1 im Querschnitt. In dem mit einem Kreis markierten und in der Fig. 3 vergrößert dargestellten Bereich bildet sich eine Sollbruchstelle 16 zwischen dem Übergangsabschnitt 5 und dem Klemmstückabschnitt 6 aus.

Die Fig. 3 zeigt in vergrößerter Darstellung einen Ausschnitt der Klemmschraube 1 der Fig. 2 im Bereich III. Die sich beim Abtrennen des Klemmstückabschnitts 6 von dem Übergangsabschnitt 5 ergebende Trennlinie 17 ist in der Fig. 3 gestrichelt dargestellt. Die Erstreckung dieser Trennlinie 17 in radialer Richtung in Bezug auf die Längsachse 2 hängt unter anderem von dem Kegelwinkel y und der Erstreckung der Ausnehmung 14 in Richtung der Längsachse 2 ab. In jedem Fall ist die Trennlinie 17 derart verlaufend, daß der Übergangsabschnitt 5 an der Sollbruchstelle 16 einen Hinterschnitt ausbildet, der von dem an der Sollbruchstelle 16 durch die Trennlinie 17 gebildeten und in der Regel ringförmigen Kragen 18 des abgetrennten Klemmstückabschnitts 6 hintergreifbar ist. Dadurch ist auch im abgetrennten Zustand der Klemmstückabschnitt 6 unverlierbar an der Klemmschraube 1 festgelegt, aber frei um diese und insbesondere den Übergangsabschnitt 5 drehbar.

Herstellungstechnisch besonders einfach kann der Übergangsabschnitt 5 durch Einformen einer in Bezug auf die Längsachse 2 symmetrische und ringförmige Nut 19 gebildet sein.

Die Fig. 4 zeigt die Klemmschraube 1 mit von dem Übergangsabschnitt 5 abgetrennten Klemmstückabschnitt 6. Erkennbar ist auch die Anlage der ersten Anlagefläche 10 des Klemmstückabschnitts 6 an der Reibschlußfläche 12 des Gewindeabschnitts 4. Erkennbar ist auch, daß die Krafteinleitung von dem mittels eines Werkzeugs drehbaren Gewindeabschnitt 4 auf den Klemmstückabschnitt 6 radial in Bezug auf die Längsachse 2 weiter innen erfolgt als die Einleitung der Kraft von der im wesentlichen feststehenden Anschlußleitung 21 (Fig. 6) auf die zweite Anlagefläche 11 des Klemmstückabschnitts 6.

Die Fig. 5 zeigt eine sich beim weiteren Eindrehen der Klemmschraube 1 ergebende Verformung des Klemmstückabschnittes 6. Dabei kommt es auch zu einer jedenfalls teilweisen Anlage der ersten Anlagefläche 10 des Klemmstückabschnittes 6 an die erste Fase 13 des Gewindeabschnitts 4. Diese Anlage geht mit einer signifikanten Erhöhung der Betätigungskraft für das Eindrehen der Klemmschraube einher und kann daher als Endpunkterkennung für das Eindrehen verwendet werden. Der sich verformende Klemmstückabschnitt 6 speichert dabei eine die klemmende und kontaktierende Wirkung dauerhaft gewährleistende Kraft, was insbesondere beim Auftreten von Temperaturschwankungen und damit einhergehenden Geometrieänderungen besonders vorteilhaft ist. Für typische Anwendungsfälle beträgt der zu übertragenden Strom beispielsweise zwischen 50 und 2.000 Ampere Dauerbelastung, insbesondere etwa 750 Ampere, und Kurzschlußbelastungen bis zu mehreren 10.000 Ampere.

Die Fig. 6 zeigt eine Vorrichtung 20 zum Klemmen und elektrischen Kontaktieren einer Anschlußleitung 21, insbesondere einer Transformatoranschlußleitung mit einer Vielzahl von feinen Anschlußdrähten 22, die beispielsweise einen Durchmesser zwischen 0,1 und 1,0 mm aufweisen, insbesondere 0,2 bis 0,5 mm, und typisch etwa 0,4 mm. Der Klemmenkörper 23 weist mindestens eine Öffnung 24 mit einem mindestens kreisbogenförmigen Innengewinde zum Einschrauben einer Klemmschraube 1 auf. Die Montage ist besonders vorteilhaft, wenn die Öffnung 24 kreiszylindrisch ist mit einem Durchmesser, der größer ist als der Durchmesser des Klemmstückabschnitts 6 der Klemmschraube 1.

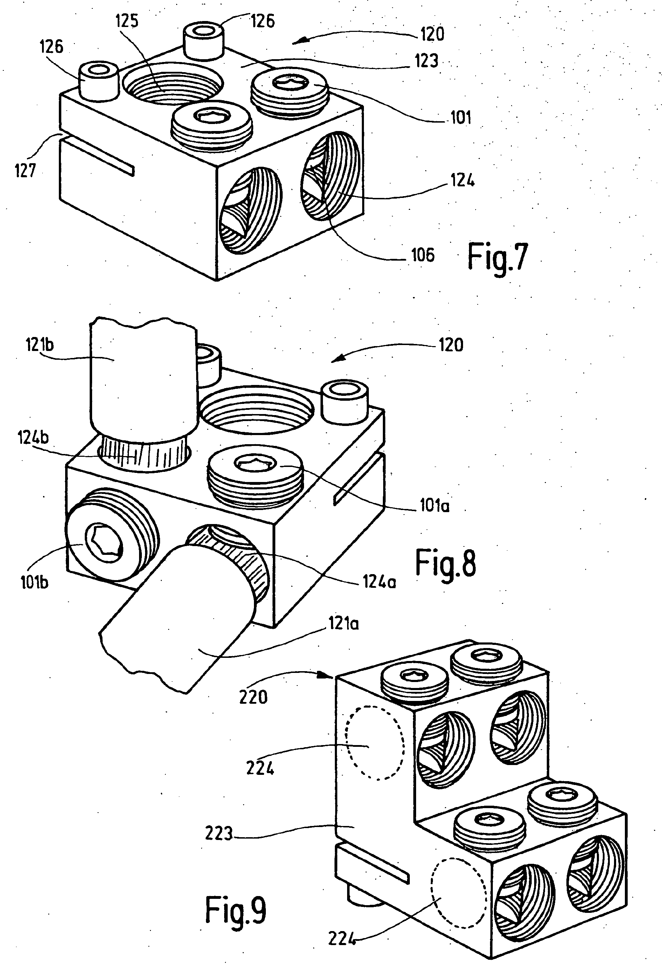

Die Fig. 7 zeigt ein zweites Ausführungsbeispiel einer Klemmvorrichtung 120 in einer perspektivischen Ansicht. Der Klemmenkörper 123 weist insgesamt vier Öffnungen 124 auf, die jeweils paarweise rechtwinklig zueinander angeordnet sind. Alle Öffnungen 124 weisen ein übereinstimmendes Innengewinde auf zum Eindrehen einer Klemmschraube 101, die im dargestellten Ausführungsbeispiel eine Innensechskantbohrung für den Werkzeugangriff aufweist. Im dargestellten Ausführungsbeispiel ist jeweils in die vertikale Öffnung 124 eine Klemmschraube 101 eingeschraubt, wobei der zugehörige Klemmstückabschnitt 106 einen nur geringfügig kleineren Durchmesser aufweist als die lichte Weite der Öffnung 124. Dadurch ist eine möglichst ganzflächige Kontaktierung und Klemmung der Anschlußleitung 121 gewährleistet.

Gleich beabstandet von den beiden für die Klemmschraube 101 vorgesehenen Öffnungen 124 weist der Klemmenkörper 123 eine parallel hierzu ausgerichtete Gewindebohrung 125 auf, die entweder ausschließlich für die mechanische Befestigung des Klemmenkörpers 123 an einer Einrichtung dienen kann, oder vorzugsweise auch für die elektrische Kontaktierung einer Einrichtung wie beispielsweise eines Transformator-Anschlußbolzens. Nach Aufschrauben des Klemmenkörpers 123 auf einen entsprechenden Gewindebolzen und Ausrichtung des Klemmenkörpers 123 in Bezug auf die anzuschließenden Anschlußleitungen (121a, 121b) kann durch Zudrehen der Fixierschrauben 126 in Zusammenwirkung mit dem Klemmschlitz 127 der Klemmenkörper 123 und mithin die Klemmvorrichtung 120 an dem Gewindebolzen festgelegt werden.

Alternativ oder ergänzend zu dieser Befestigungsmethode kann der Klemmenkörper 123 auch nur auf einen Bolzen bis zu einer gegebenenfalls auch einstellbaren Anlagefläche aufgesteckt werden und anschließend beispielsweise mit einer auf ein Außengewinde des Bolzens aufschraubbaren Mutter befestigt werden. In diesem Fall kann anstelle der Gewindebohrung 125 eine einfache Durchgangsbohrung verwendet werden.

Die Fig. 8 zeigt die Klemmvorrichtung 120 der Fig. 7 aus einer anderen Perspektive und mit geklemmten Anschlußleitungen 121a, 121b. Während für die erste Anschlußleitung 121a in die horizontal ausgerichtete Öffnung 124a eingesteckt ist und durch die in die korrespondierende vertikale Öffnung eingeschraubte Klemmschraube 101 a geklemmt wurde, ist die zweite Anschlußleitung 121b in die vertikal ausgerichtete Öffnung 124b eingesteckt und durch die in die korrespondierende horizontale Öffnung eingeschraubte Klemmschraube 101 b geklemmt.

Grundsätzlich ist es möglich, die Klemmvorrichtung 120 nicht nur als Anschlußklemme beispielsweise für einen Transformator zu verwenden, sondern auch als Verbindungsklemme für die beiden Anschlußleitungen 121a, 121b.

Die Fig. 9 zeigt ein drittes Ausführungsbeispiel einer Klemmvorrichtung 220. Diese unterscheidet sich gegenüber dem in den Fig. 7 und 8 dargestellten zweiten Ausführungsbeispiel im wesentlichen durch die treppenartige Anordnung von insgesamt vier Klemmpositionen. Alle vier zu klemmenden Anschlußleitungen können horizontal oder vertikal zugeführt werden. Dadurch ergeben sich größtmögliche Freiheiten bei der Montage der Klemmvorrichtung 220 bzw. bei der Zuführung der Anschlußleitungen. Die in der Fig. 9 nicht sichtbare Gewindebohrung zum Befestigen der Klemmvorrichtung 220 beispielsweise an einem Transformator-Anschlußbolzen ist in diesem Ausführungsbeispiel auf der Unterseite als Sacklochbohrung ausgeführt. In einer weiteren Ausgestaltung der Erfindung wäre auch eine dritte, in der Fig. 9 nur punktiert angedeutete Öffnung 224 an den Stirnseiten des Klemmkörpers 223 möglich, die einen weiteren Freiheitsgrad betreffend die Zuführung der Anschlußleitungen bereitstellen würde.

Durch die Verwendung der Klemmschrauben 1, 101 ist gewährleistet, daß auch ein aus dünnen Einzeldrähten bestehender Leiter während des Einschraub- und Klemmvorgangs nur geklemmt, aber beispielsweise nicht verschoben oder abgeschert wird. Durch die flächige Pressung der Einzeladern bleibt der Gesamtverband des Leiterseiles an der Klemmstelle im wesentlichen erhalten. Es kann daher auf die Verwendung von Adernendhülsen verzichtet werden, die bei ähnlichen Klemmen aus dem Stand der Technik jeweils über den abisolierten Leiter gestülpt werden müssen. Daher entfällt auch das Vorhalten und Mitsichführen entsprechender Adernendhülsen bei der Montage, die außerdem immer in der passenden Querschnittsgröße vorgehalten werden müssen.

## Patentansprüche

1. Klemmenkörper (123) für eine Vorrichtung (120) zum Klemmen und elektrischen Kontaktieren einer Anschlußleitung (121), insbesondere einer feindrähtigen Transformator-Anschlußleitung, wobei der Klemmenkörper (123) mindestens eine erste und eine zweite Öffnung (124) aufweist, die miteinander verbunden sind und die jeweils für ein Einschrauben einer Klemmschraube (101) geeignet sind, mittels der die Anschlußleitung (121) in dem Klemmenkörper (123) klemmbar und elektrisch kontaktierbar ist, **dadurch gekennzeichnet, daß** die erste und zweite Öffnung (124) derart einander zugeordnet sind, daß in die eine der ersten und zweiten Öffnung (124) die Anschlußleitung (121) einführbar ist und dort mittels der in die andere der ersten und zweiten Öffnung (124) einschraubbaren Klemmschraube (101) klemmbar ist.

2. Klemmenkörper (123) nach Anspruch 1, **dadurch gekennzeichnet, daß** die beiden einander zugeordneten und miteinander verbundenen Öffnungen (124) rechtwinklig zueinander an dem Klemmenkörper (123) angeordnet sind.

3. Klemmenkörper (123) nach Anspruch 1 oder 2, **dadurch gekennzeichnet, daß** der Klemmenkörper (123) eine dritte Öffnung (224) aufweist, und daß die dritte Öffnung (224) der ersten und zweiten Öffnung (124) zugeordnet und mit diesen verbunden ist.

4. Klemmenkörper (123) nach Anspruch 3, **dadurch gekennzeichnet, daß** die dritte Öffnung (224) rechtwinklig zu der ersten und zweiten Öffnung (124) angeordnet ist.

5. Klemmenkörper (123) nach einem der Ansprüche 1 bis 4, **dadurch gekennzeichnet, daß** die erste und zweite Öffnung (124) jeweils ein Innengewinde aufweisen.

6. Klemmenkörper (123) nach einem der Ansprüche 1 bis 5, **dadurch gekennzeichnet, daß** der Klemmenkörper (123) weiterhin eine Gewindebohrung (125) aufweist zur Festlegung des Klemmenkörpers (123) an einer Einrichtung, beispielsweise an einem Transformator-Anschlußbolzen.

7. Klemmenkörper (123) nach einem der Ansprüche 1 bis 6, **dadurch gekennzeichnet, daß** der Klemmenkörper (123) weiterhin einen Klemmschlitz (127) und Bohrungen für die Aufnahme von Fixierschrauben (126) aufweist, mittels denen der Klemmenkörper (123) in Zusammenwirken mit dem Klemmschlitz (127) an einer Einrichtung festlegbar ist, beispielsweise an einem Transformator-Anschlußbolzen.

8. Klemmenkörper (123) nach einem der Ansprüche 1 bis 7, **dadurch gekennzeichnet, daß** der Klemmenkörper (123) mehrere Gruppen von jeweils mindestens zwei einander zugeordneten und miteinander verbundenen Öffnungen (124) aufweist.

9. Klemmenkörper (123) nach Anspruch 8, **dadurch gekennzeichnet, daß** die Gruppen treppenartig an dem Klemmenkörper (123) angeordnet sind.

## Claims

1. A clamping body (123) for a device (120) for the clamping and electrical contacting of a connection line (121), in particular a finely stranded transformer connection line, wherein the clamping body (123) has at least a first and a second opening (124) that are connected to one another and which are each suitable for screwing in a clamping screw (101) by means of which the connection line (121) is clampable and electrically contactable in the clamping body (123), **characterised in that** the first and second openings (124) are associated with one another in such a way that the connection line (121) is introducible into one of the first and second openings (124) and is clampable there by means of the clamping screw (101) that can be screwed into the other of the first and second openings (124).

2. A clamping body (123) according to Claim 1, **characterised in that** the two openings (124) associated with one another and connected to one another are arranged at right angles to one another on the clamping body (123).

3. A clamping body (123) according to Claim 1 or 2, **characterised in that** the clamping body (123) has a third opening (224), and **in that** the third opening (224) is associated with the first and second openings (124) and is connected to these.

4. A clamping body (123) according to Claim 3, **characterised in that** the third opening (224) is arranged at right angles to the first and second openings (124).

5. A clamping body (123) according to any one of Claims 1 to 4, **characterised in that** the first and second openings (124) each have an internal thread.

6. A clamping body (123) according to any one of Claims 1 to 5, **characterised in that** the clamping body (123) furthermore comprises a threaded bore (125) for fixing the clamping body (123) to a device, for example, to a transformer connecting bolt.

7. A clamping body (123) according to any one of Claims 1 to 6, **characterised in that** the clamping body (123) furthermore comprises a clamping slot (127) and bores for receiving fixing screws (126), by means of which the clamping body (123) in cooperation with the clamping slot (127) is fixable to a device, for example, to a transformer connection bolt.

8. A clamping body (123) according to any one of Claims 1 to 7, **characterised in that** the clamping body (123) comprises a plurality of groups of in each case at least two openings (124) associated with one another and connected to one another.

9. A clamping body (123) according to Claim 8, **characterised in that** the groups are arranged in step form on the clamping body (123).

## Revendications

1. Corps de collier (123) pour un dispositif (120) visant à coincer une ligne de connexion (121) et à réaliser un contact électrique avec elle, en particulier une ligne de connexion de transformateur à fils fins, le corps de collier (123) ayant au moins une première et une deuxième ouverture (124) qui communiquent l'une avec l'autre et qui conviennent chacune à un vissage d'une vis de serrage (101) au moyen de laquelle la ligne de connexion (121) peut être coincée dans le corps de collier (123) et mise en contact électrique, **caractérisé en ce que** la première et la deuxième ouverture (124) sont associées l'une à l'autre de sorte que la ligne de connexion (121) peut être introduite dans l'une ouverture de la première et deuxième ouverture (124) et peut y être coincée au moyen de la vis de serrage (101) pouvant être vissée dans l'autre de la première et deuxième ouverture (124).

2. Corps de collier (123) selon la revendication 1, **caractérisé en ce que** les deux ouvertures (124) associées l'une à l'autre et communiquent l'une avec l'autre sont disposées à angle droit l'une par rapport à l'autre sur le corps de collier (123).

3. Corps de collier (123) selon la revendication 1 ou 2, **caractérisé en ce que** le corps de collier (123) a une troisième ouverture (224), et **en ce que** la troisième ouverture (224) est associée à la première et à la deuxième ouverture (124), et communiquent avec elles.

4. Corps de collier (123) selon la revendication 3, **caractérisé en ce que** la troisième ouverture (224) est disposée à angle droit par rapport à la première et à la deuxième ouverture (124).

5. Corps de collier (123) selon l'une des revendications 1 à 4, **caractérisé en ce que** la première et la deuxième ouverture (124) ont chacun un taraudage.

6. Corps de collier (123) selon l'une des revendications 1 à 5, **caractérisé en ce que** le corps de collier (123) a également un taraudage (125) pour la fixation du corps de collier (123) sur un équipement, par exemple sur un boulon de connexion de transformateur.

7. Corps de collier (123) selon l'une des revendications 1 à 6, **caractérisé en ce que** le corps de collier (123) a également une fente de serrage (127) et des alésages pour loger des vis de fixation (126) au moyen desquelles le corps de collier (123) peut, en coopération avec la fente de serrage (127), être fixé sur un équipement, par exemple sur un boulon de connexion de transformateur.

8. Corps de collier (123) selon l'une des revendications 1 à 7, **caractérisé en ce que** le corps de collier (123) présente plusieurs groupes de respectivement au moins deux ouvertures (124) associées l'une à l'autre et communiquent l'une avec l'autre.

9. Corps de collier (123) selon la revendication 8, **caractérisé en ce que** les groupes sont disposés en escalier sur le corps de collier (123).
